(19) Europäisches Patentamt
European Patent Office
Office européen des brevets

(11) **EP 2 149 041 B1**

(12) **FASCICULE DE BREVET EUROPEEN**

(45) Date de publication et mention
de la délivrance du brevet:
**08.08.2012 Bulletin 2012/32**

(51) Int Cl.:
***G01N 21/31*** *(2006.01)*     ***G01N 21/64*** *(2006.01)*
***G01J 3/427*** *(2006.01)*     ***G01N 33/483*** *(2006.01)*

(21) Numéro de dépôt: **08805758.3**

(22) Date de dépôt: **07.05.2008**

(86) Numéro de dépôt international:
**PCT/FR2008/050809**

(87) Numéro de publication internationale:
**WO 2008/152267 (18.12.2008 Gazette 2008/51)**

(54) **PROCEDE ET SYSTEME POUR CARACTERISER UN TISSU BIOLOGIQUE**

VERFAHREN UND VORRICHTUNG ZUR ANALYSE VON BIOLOGISCHEM GEWEBE

METHOD AND DEVICE FOR CHARACTERISING BIOLOGICAL TISSUE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **11.05.2007 FR 0703436**

(43) Date de publication de la demande:
**03.02.2010 Bulletin 2010/05**

(73) Titulaires:
• **Force-A**
**91400 Orsay (FR)**
• **Centre National de la Recherche Scientifique (CNRS)**
**75794 Paris Cedex 16 (FR)**
• **Université Paris Sud**
**91400 Orsay (FR)**

(72) Inventeurs:
• **CEROVIC, Zoran**
**F-75015 Paris (FR)**
• **MOISE, Nicolae**
**"décédé" (FR)**
• **GOULAS, Yves**
**F-92350 Le Plessis Robinson (FR)**
• **AYRAL, Jean-Luc**
**F-92160 Antony (FR)**

(74) Mandataire: **Pontet, Bernard**
**PONTET ALLANO & Associés**
**6, Avenue du Général De Gaulle**
**78000 Versailles (FR)**

(56) Documents cités:
**FR-A- 2 830 325**

• **MEYER S ET AL: "Relationships between optically assessed polyphenols and chlorophyll contents, and leaf mass per area ratio in woody plants: a signature of the carbon-nitrogen balance within leaves?" PLANT, CELL AND ENVIRONMENT, vol. 29, no. 7, juillet 2006 (2006-07), pages 1338-1348, XP002459287**
• **PENG S ET AL: "ADJUSTMENT FOR SPECIFIC LEAF WEIGHT IMPROVES CHLOROPHYLL METER'S ESTIMATE OF RICE LEAF NITROGEN CONCENTRATION" AGRONOMY JOURNAL, MADISON, WI, US, vol. 85, 1993, pages 987-990, XP001154895 ISSN: 0002-1962**
• **MARKWELL J ET AL: "Calibration of the Minolta SPAD-502 leaf chlorophyll meter" PHOTOSYNTHESIS RESEARCH, vol. 46, no. 3, 1995, pages 467-472, XP009092421**
• **GOULAS Y ET AL: "Dualex: a new instrument for field measurements of epidermal ultraviolet absorbance by chlorophyll fluorescence"" APPLIED OPTICS, vol. 43, no. 23, 10 août 2004 (2004-08-10), pages 4488-4496, XP002459288**
• **CARTELAT A ET AL: "Optically assessed contents of leaf polyphenolics and chlorophyll as indicators of nitrogen deficiency in wheat (Triticum aestivum L.)" FIELD CROPS RESEARCH, ELSEVIER, AMSTERDAM, NL, vol. 91, no. 1, 14 janvier 2005 (2005-01-14), pages 35-49, XP004699781 ISSN: 0378-4290 cité dans la demande**

**Description**

La présente invention concerne un procédé pour caractériser un tissu biologique. Elle concerne également un système mettant en oeuvre ce procédé.

L'invention concerne, plus particulièrement, un procédé et un système pour caractériser un tissu biologique, tel qu'une feuille végétale, comprenant un premier composé chromophore et fluorescent, tel que la chlorophylle, et un second composé chromophore peu ou pas fluorescent, tel qu'un flavonoïde. La caractérisation vise à déterminer la teneur en composé chromophore et fluorescent et en second composé chromophore du tissu biologique. Une telle caractérisation d'un tissu biologique présente un grand intérêt car la teneur en composé chromophore et fluorescent et en second composé chromophore du tissu biologique représente une information concernant la constitution et l'état biologique du tissu concerné et facilite la gestion et le traitement de l'entité dont provient le tissu biologique.

Le document FR 2 830 325 divulgue un instrument optique qui permet de mesurer des caractéristiques d'absorption lumineuse d'un échantillon de tissu biologique comprenant un composé chromophore et fluorescent et un second composé chromophore peu ou pas fluorescent. Le procédé divulgué dans ce document consiste à mesurer la fluorescence induite par excitation du composé fluorescent par un premier et un deuxième rayonnement de longueurs d'onde différentes et éclairant l'échantillon de tissu biologique. L'un de ces rayonnements, dit de référence, est peu ou pas absorbé par le second composé alors que l'autre est relativement bien absorbé. En mesurant la fluorescence induite par les deux rayonnements et en faisant le rapport des fluorescences mesurées, le procédé permet de mesurer les caractéristiques d'absorption lumineuse de l'échantillon et par conséquent la teneur en second composé du tissu biologique.

L'état de l'art comprend aussi la mesure optique de la teneur en composé chromophore et fluorescent d'un tissu biologique par une mesure d'absorption différentielle de ce composé, comme décrit dans le document US 4 986 665. En général une telle mesure met en oeuvre deux sources lumineuses : une située dans une bande d'absorption de ce composé et l'autre qui se trouve à l'extérieur de cette bande d'absorption.

Cependant, il n'existe actuellement aucun système pour réaliser la mesure conjointe de la teneur en un composé chromophore et fluorescent et en un second composé chromophore, peu ou pas fluorescent, d'un tissu biologique par les procédés de mesure décrits ci-dessus.

Un but de l'invention est de proposer un procédé et un système de mesure conjointe de la teneur en un composé chromophore et fluorescent et en un second composé chromophore d'un tissu biologique par les procédés de mesure décrits ci-dessus.

L'invention propose ainsi un procédé pour caractériser un échantillon de tissu biologique comprenant un premier composé chromophore et fluorescent et un second composé chromophore, ledit procédé comprenant les étapes suivantes :

- détermination, par mesure optique des caractéristiques d'absorption du tissu biologique, et plus particulièrement du composé chromophore et fluorescent, de la teneur en ce composé chromophore et fluorescent de l'échantillon ;
- détermination, par mesure optique de fluorescence du composé chromophore et fluorescent, de la teneur en second composé chromophore dudit échantillon.

Par second composé chromophore, on désigne un composé chromophore qui est peu ou pas fluorescent.

Par tissu biologique, on désigne un tissu provenant d'une entité vivante, tel qu'un être végétal, humain ou animal. Un exemple de tissu biologique est une feuille végétale.

La détermination de la teneur en second composé chromophore est bien connue de l'homme du métier, qu'il n'est pas nécessaire de détailler ici. Pour plus de précision, à ce sujet, on peut se rapporter au document FR 2 830 325. D'une manière similaire, la détermination de la teneur en composé chromophore et fluorescent est réalisée par mesure d'absorption différentielle, qui est aussi bien connue de l'homme du métier, qu'il n'est pas non plus nécessaire de détailler ici. Pour plus de précision, à ce sujet, on peut se rapporter au document US 4 986 665.

Il n'est pas évident pour l'homme du métier de réaliser la détermination conjointe de la teneur en un composé chromophore et fluorescent et en un second composé chromophore d'un tissu biologique car ces deux déterminations, faisant intervenir la mesure à la fois de l'absorption et de la fluorescence d'un même composé chromophore et fluorescent, sont considérées comme étant incompatibles. En effet, les procédés actuellement connus réalisent ces déterminations de manière séparée car elles mettent en oeuvre des mesures faisant intervenir des sources lumineuses dont les longueurs d'ondes ne sont pas compatibles entre elles. Ce qui pousse l'homme du métier à penser que ces deux déterminations ne peuvent pas être réalisées conjointement.

Avantageusement, le procédé selon l'invention permet de réaliser conjointement ces deux déterminations, ce qui présente un intérêt certain pour la caractérisation du tissu biologique et pour la gestion de l'entité dont provient ce tissu biologique. De plus, une détermination conjointe de la teneur en un composé chromophore et fluorescent et un second composé chromophore d'un tissu biologique permet de réaliser un gain de temps et de précision par rapport aux procédés de l'état de l'art.

De plus, le procédé selon l'invention permet avantageusement de caractériser le tissu biologique de manière non-destructive et in-situ.

Le procédé selon l'invention peut en outre comprendre une étape de détermination d'une quantité proportionnelle au rapport entre la teneur en composé chromophore et fluorescent et la teneur en second composé chromophore. Dans l'exemple d'application nullement limitatif où le tissu biologique est une feuille végétale comprenant un composé chromophore et fluorescent qui est la chlorophylle et un second composé chromophore qui est un composé de la famille des phénylpropanoïdes ou des polyphénols, comme un flavonoïde, le procédé selon l'invention permet de déterminer une quantité proportionnelle au rapport entre la teneur en chlorophylle et la teneur en flavonoïde de la feuille végétale. Les études montrent que le rapport chlorophylle/flavonoïde est caractérisé par des zones de stabilité le long d'une feuille végétale et a un pouvoir discriminateur plus précis du besoin en azote. Ce qui en fait un indicateur important pour la gestion des cultures. Voir à ce sujet l'article de Aurélie Cartelat et coll. intitulé « Optically assessed contents of leaf polyphenolics and chlorophyll as indicators of nitrogen deficiency in wheat (Triticum aestivum L.) ». (Field Crops Research, 2005, 91: p. 35-49).

Selon l'invention, la détermination de la teneur en second composé chromophore de l'échantillon comprend les opérations suivantes :

- émission, par des premiers moyens d'émission en direction de l'échantillon, d'un premier et d'un deuxième rayonnement optique, de longueurs d'ondes différentes, chacun choisi de manière à induire un rayonnement de fluorescence du composé chromophore et fluorescent,
- une première mesure, par des premiers moyens de mesure, des rayonnements de fluorescence induits par les premier et deuxième rayonnements, et
- détermination, à partir de la première mesure, de la teneur en second composé chromophore de l'échantillon.

D'une manière similaire, la détermination de la teneur en composé chromophore et fluorescent de l'échantillon, comprend les opérations suivantes :

- émission, par des deuxième moyens d'émission en direction de l'échantillon, d'un troisième et d'un quatrième rayonnement optique, de longueurs d'ondes différentes, chacun destiné à être partiellement absorbé par le composé chromophore et fluorescent, mais en quantités différentes,
- une deuxième mesure, par des seconds moyens de mesure, d'au moins une partie non absorbée des troisième et quatrième rayonnements, et
- détermination, à partir de la deuxième mesure, de la teneur en composé chromophore et fluorescent de l'échantillon.

Par partie non absorbée des troisième et quatrième rayonnements, on entend la partie qui est réfléchie ou transmise par le composé chromophore et fluorescent des troisième et quatrième rayonnements.

La première mesure peut comprendre au moins une mesure du côté des premiers moyens d'émission. Dans ce cas les premiers moyens de mesure se trouvent au moins en partie du coté des premiers moyens d'émission. Les rayonnements fluorescents mesurés sont les rayonnements de fluorescence qui se propagent vers les premiers moyens de d'émission.

La première mesure peut comprendre au moins une mesure du côté opposé aux premiers moyens d'émission, dans ce cas les premiers moyens de mesure se trouvent au moins en partie du coté opposé aux premiers moyens d'émission. Les rayonnements fluorescents mesurés sont les rayonnements de fluorescence qui se propagent vers le côté opposé aux premiers moyens d'émission.

Par ailleurs, la deuxième mesure peut comprendre au moins une mesure du côté des deuxièmes moyens d'émission. Dans ce cas les deuxièmes moyens de mesure se trouvent au moins en partie du coté des deuxièmes moyens d'émission et réalisent la mesure de la partie non absorbée par le composé chromophore et fluorescent des troisième et quatrième rayonnements et qui se propage vers les deuxièmes moyens d'émission, c'est-à-dire la partie réfléchie des troisième et quatrième rayonnements par le composé chromophore et fluorescent.

La deuxième mesure peut également comprendre au moins une mesure du côté opposé aux deuxièmes moyens d'émission. Dans ce cas les deuxièmes moyens de mesure se trouvent au moins en partie du coté opposé aux deuxièmes moyens d'émission et réalisent la mesure de la partie non absorbée des troisième et quatrième rayonnements et qui se propagent vers le côté opposé aux deuxièmes moyens d'émission, c'est-à-dire la partie transmise des troisième et quatrième rayonnements par le composé chromophore et fluorescent.

De plus, selon l'invention, les premiers moyens de mesure et les seconds moyens de mesure comprennent des moyens de détection communs, le procédé comprenant en outre au moins un premier filtrage, entre l'échantillon et les moyens de détection, le premier filtrage étant destiné à :

- bloquer, au moins en partie, le passage des premier et deuxième rayonnements, vers les moyens de détection, et
- autoriser, au moins en partie, le passage de la partie non absorbée des troisième et quatrième rayonnements par l'échantillon et qui se propage vers les moyens de détection.

En effet, le procédé selon l'invention comprend la mise en oeuvre de moyens de détection uniques, c'est-à-dire, utilisés à la fois pour la mesure des rayonnements de fluorescence du composé chromophore et fluorescent et pour la mesure de la partie non absorbée des troisième et quatrième rayonnements par ce même composé. Or, l'utilisation de moyens de détection uniques pose des problèmes d'incompatibilité des longueurs d'onde intervenant lors de ces mesures, c'est-à-dire lors de la mesure, d'une part de la teneur en second composé chromophore du tissu biologique par la méthode de fluorescence du composé chromophore et fluorescent, et d'autre part de la teneur en composé chromophore et fluorescent par absorption différentielle du composé chromophore et fluorescent. Le procédé selon l'invention permet de résoudre ce problème par le premier filtrage réalisé entre l'échantillon et les moyens de détection uniques.

L'utilisation de moyens de filtrage uniques pour les deux mesures est avantageusement moins onéreux à mettre en oeuvre, moins encombrant et répond à des contraintes liées au couplage optique entre la surface mesurée du tissu biologique et les moyens de détection lorsque les moyens de détection pour les deux mesures sont séparés.

L'avantage de moyens de détection et de filtrage uniques apparaît aussi quand ces moyens de détection sont des moyens d'acquisition d'images comme une caméra CCD. Dans ce cas, on est assuré de pouvoir établir une correspondance pixel à pixel entre les images produites par les premier, deuxième, troisième et quatrième rayonnements.

Selon une version avantageuse du procédé selon l'invention, en plus des moyens de détection uniques, des moyens de mesure uniques peuvent être mis en oeuvre pour la mesure conjointe des rayonnements de fluorescence du composé chromophore et fluorescent et des rayonnements issus des deuxièmes moyens d'émission non absorbés par ce même composé.

Par ailleurs, le procédé selon l'invention peut avantageusement comprendre, entre les moyens d'émission et l'échantillon, un second filtrage prévu pour bloquer au moins une partie des rayonnements émis en direction de l'échantillon. Cette opération de filtrage peut consister à éliminer une partie non désirable des rayonnements émis vers l'échantillon par les premiers et les seconds moyens d'émission.

Selon l'invention, le premier rayonnement est choisi de manière à ce que sa longueur d'onde :

1. n'est pas comprise dans une bande de longueurs d'onde d'absorption du second composé chromophore, et
2. est comprise dans une bande de longueurs d'onde d'excitation de la fluorescence du composé chromophore et fluorescent ;
et, le deuxième rayonnement est choisi de manière à ce que sa longueur d'onde :
3. est comprise dans une bande de longueurs d'onde d'absorption du second composé chromophore, et
4. est comprise dans une bande de longueurs d'onde d'excitation de la fluorescence du composé chromophore et fluorescent.

D'une manière similaire, le troisième rayonnement est choisi de manière à ce que sa longueur d'onde :

1. est comprise dans une bande de longueurs d'onde d'absorption du composé chromophore et fluorescent, et
2. n'est pas comprise dans une bande de longueurs d'onde d'absorption du second composé chromophore ;
et le quatrième rayonnement est choisi de manière à ce que sa longueur d'onde :
3. n'est pas comprise dans une bande de longueurs d'ondes d'absorption du composé chromophore et fluorescent, et
4. n'est pas comprise dans une bande de longueurs d'onde d'absorption du second composé chromophore.

Avantageusement, le deuxième (ou le premier) rayonnement optique peut être émis à une intensité prédéterminée et le premier (le deuxième) rayonnement optique est émis à une intensité variable de manière à ce que les rayonnements de fluorescence induits par chacun des premier et deuxième rayonnements soient égaux en intensité. L'intensité du premier (le deuxième) rayonnement est alors ajusté en fonction d'un signal, dit de commande, relatif aux intensités des rayonnements de fluorescence induits, d'une part par le premier rayonnement et d'autre part par le deuxième rayonnement. Le procédé selon l'invention permet ainsi de contrôler les effets de fluorescence variable du composé chromophore et fluorescent, dans le but de réaliser une détermination plus rapide et plus précise de la teneur en second composé chromophore du tissu biologique.

De plus, les intensités du premier et du deuxième rayonnement peuvent varier de manière alternée, en décalage de phase, à une fréquence prédéterminée, ainsi que les intensités du troisième et du quatrième rayonnement, permettant ainsi une mesure individuelle :

- de chacun des rayonnements de fluorescence induits par chacun des premier et deuxième rayonnements, et

- de la partie non absorbée par le tissu biologique de chacun des troisième et quatrième rayonnements.

Selon une particularité avantageuse du procédé selon l'invention, la détermination de la teneur en composé chromophore et fluorescent et la détermination de la teneur en second composé chromophore sont réalisées à tour de rôle.

De plus, chacun des rayonnements peut être émis sous forme d'impulsions. Par exemple, lors de la détermination de la teneur en second composé chromophore du tissu, des impulsions du premier et du deuxième rayonnement peuvent être émises de manière alternée à une fréquence prédéterminée.

Par ailleurs, les intensités des premier, deuxième, troisième et quatrième rayonnements peuvent varier de manière périodique, comme par exemple une modulation sinusoïdale ou quasi-sinusoïdale, et à des fréquences de modulation différentes, permettant ainsi une mesure individuelle :

- de chacun des rayonnements de fluorescence induits par chacun des premier et deuxième rayonnements, et
- de la partie non absorbée par le tissu biologique de chacun des troisième et quatrième rayonnements.

Selon un autre aspect de l'invention il est proposé, une utilisation du procédé selon l'invention pour la caractérisation d'une feuille végétale où le composé chromophore et fluorescent est la chlorophylle et le second composé chromophore comprend un composé de la famille des phénylpropanoïdes, notamment des flavonoïdes. Les rayonnements utilisés peuvent avoir des longueurs d'ondes choisies autour des valeurs suivantes :

- le premier rayonnement : 650 nm ;
- le deuxième rayonnement : 370 nm ;
- le troisième rayonnement : 720 nm ; et
- le quatrième rayonnement : 780 nm.

Avantageusement, l'utilisation selon l'invention peut comprendre en outre une détermination de la régulation d'allocation de carbone sous l'influence de la disponibilité en azote en fonction de la teneur en chlorophylle et en phénylpropanoïdes. Voir à ce sujet l'article de Sylvie Meyer et coll. intitulé "Relationships between optically assessed polyphenols and chlorophyll contents, and leaf mass per area ratio in woody plants: a signature of the carbon-nitrogen balance within leaves?" (Plant, Cell and Environment, 2006, 29: p. 1338-1348).

D'autres utilisations peuvent être envisagées comme la caractérisation de l'efficacité de transfert par les caroténoïdes des feuilles de l'énergie d'excitation à la chlorophylle. Dans ce cas les caroténoïdes jouent le rôle du second composé chromophore non fluorescent.

Selon un troisième aspect de l'invention, il est proposé un système pour caractériser un échantillon de tissu biologique comprenant un premier composé chromophore et fluorescent et un second composé chromophore, ledit système comprenant :

- des premiers moyens pour déterminer, par mesure optique de fluorescence du composé chromophore et fluorescent, la teneur en second composé chromophore de l'échantillon ;
- des deuxièmes moyens pour déterminer, par mesure optique des caractéristiques d'absorption du composé chromophore et fluorescent, la teneur en composé chromophore et fluorescent de l'échantillon.

Le système selon l'invention peut en outre comprendre des moyens de calcul pour déterminer une quantité proportionnelle au rapport entre la teneur en composé chromophore et fluorescent et la teneur en second composé chromophore. Ces moyens de calcul peuvent comprendre des programmes destinés à être utilisés dans des moyens électroniques ou informatiques.

Selon l'invention, les premiers moyens comprennent :

- des premiers moyens d'émission en direction de l'échantillon d'un premier et d'un deuxième rayonnement optique, de longueurs d'ondes différentes, chacun choisi de manière à induire un rayonnement de fluorescence du composé chromophore et fluorescent,
- des premiers moyens de mesure, pour mesurer les rayonnements de fluorescence induits par les premier et deuxième rayonnements,
- des moyens de calcul pour déterminer, à partir de la mesure des rayonnements de fluorescence, la teneur en second composé chromophore de l'échantillon ; et
  les seconds moyens comprennent :
- des deuxièmes moyens d'émission en direction de l'échantillon, d'un troisième et d'un quatrième rayonnements optiques, de longueurs d'ondes différentes, chacun destiné à être partiellement absorbé, mais en quantités différentes, par le composé chromophore et fluorescent,

- des deuxièmes moyens de mesure, pour mesurer au moins une partie non absorbée des troisième et quatrième rayonnements, et
- des moyens de calcul pour déterminer, à partir de la mesure d'au moins une partie non absorbée des troisième et quatrième rayonnements, la teneur en composé chromophore et fluorescent de l'échantillon.

Selon l'invention, les premiers moyens de mesure et les seconds moyens de mesure comprennent des moyens de détection communs, le système comprenant en outre des premiers moyens de filtrage, disposés entre l'échantillon et les moyens de détection, les premiers moyens de filtrage étant destinés à :

- bloquer, au moins en partie, le passage des premier et deuxième rayonnements, vers les moyens de mesure, et
- autoriser, au moins en partie, le passage de la partie non absorbée des troisième et quatrième rayonnements par l'échantillon et qui se propage vers les moyens de détection.

Les moyens de détection peuvent en particulier comprendre une photodiode au silicium prévue pour détecter d'une part les rayonnements de fluorescence du composé chromophore et fluorescent induits par chacun des premier et deuxième rayonnements, et d'autre part la partie non absorbée des troisième et quatrième rayonnements. De plus, les premiers moyens de filtrage peuvent comprendre au moins un filtre coloré.

Selon un premier mode de réalisation du système selon l'invention, les moyens de détection sont disposés d'un coté de l'échantillon du tissu et les premiers et les deuxièmes moyens d'émission sont disposés de l'autre coté de l'échantillon. Dans ce mode de réalisation, les moyens de détection détectent :

- les rayonnements de fluorescence qui se propagent vers le côté opposé aux premiers et deuxièmes moyens d'émission, et
- la partie non absorbée des troisième et quatrième rayonnements et qui se propage vers le côté opposé aux premiers et deuxièmes moyens d'émission, c'est-à-dire la partie transmise des troisième et quatrième rayonnements par le composé chromophore et fluorescent.

Dans ce premier mode de réalisation, le système selon l'invention peut se présenter sous la forme, par exemple, d'une pince.

Selon un deuxième mode de réalisation du système selon l'invention, les moyens de détection, et les premiers et les deuxièmes moyens d'émission sont disposés du même coté de l'échantillon de tissu. Dans ce mode de réalisation, les moyens de détection détectent :

- les rayonnements fluorescents du composé chromophore et fluorescent qui se propagent vers les premiers et les deuxièmes moyens d'émission, et
- la partie non absorbée par le composé chromophore et fluorescent des troisième et quatrième rayonnements et qui se propage vers les premiers et les deuxièmes moyens d'émission, c'est-à-dire la partie réfléchie des troisième et quatrième rayonnements par le composé chromophore et fluorescent.

Avantageusement, le système selon l'invention peut en outre comprendre des moyens d'amplification et/ou d'analyse des rayonnements détectés par les moyens de détection.

Par ailleurs le système selon l'invention peut en outre comprendre des seconds moyens de filtrage, disposés entre les moyens d'émission et l'échantillon, et prévus pour bloquer au moins une partie indésirable des rayonnements émis en direction de l'échantillon.

Le système peut en outre comprendre des moyens de contrôle et de commande fournissant un signal de commande vers les premiers moyens d'émission de sorte que les rayonnements de fluorescence induits par le premier et le deuxième rayonnement optique soient sensiblement égaux en intensité.

De plus, le système peut avantageusement comprendre des moyens de synchronisation fournissant un signal de synchronisation vers les premiers et deuxième moyens d'émission de sorte que :

- les intensités du premier et du deuxième rayonnement varient de façon périodique, en décalage de phase l'une par rapport à l'autre, et
- les intensités du troisième et du quatrième rayonnement varient de façon périodique, en décalage de phase l'une par rapport à l'autre.

D'autre part, le système peut comprendre de manière alternative des moyens de modulation fournissant un signal de modulation vers les moyens d'émission de sorte que les intensités des premier, deuxième, troisième et quatrième rayonnements varient de manière périodique, par exemple sinusoïdalement, à des fréquences de modulation différentes.

D'autres caractéristiques et avantages de l'invention apparaîtront à l'examen de la description détaillée d'un mode de réalisation nullement limitatif, et des dessins annexés sur lesquels :

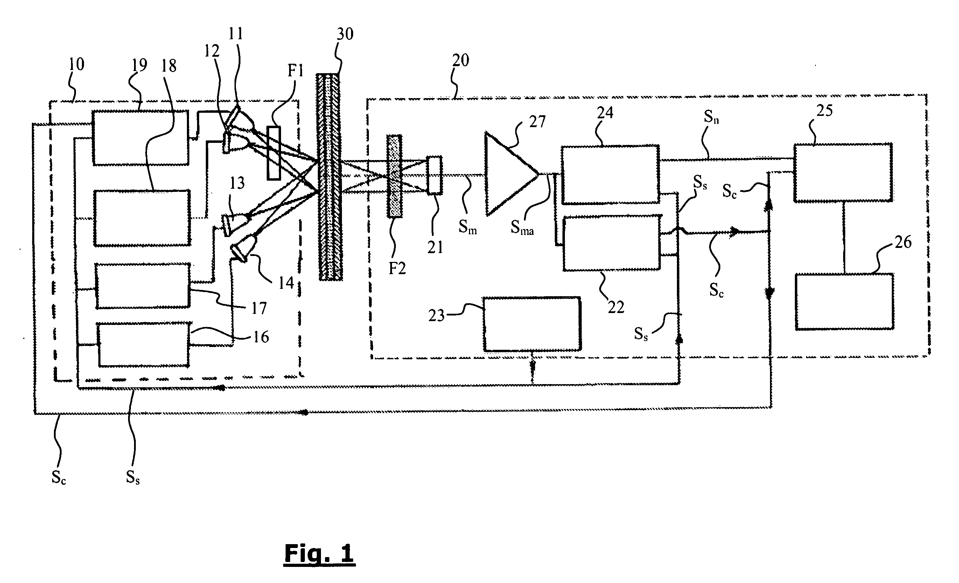

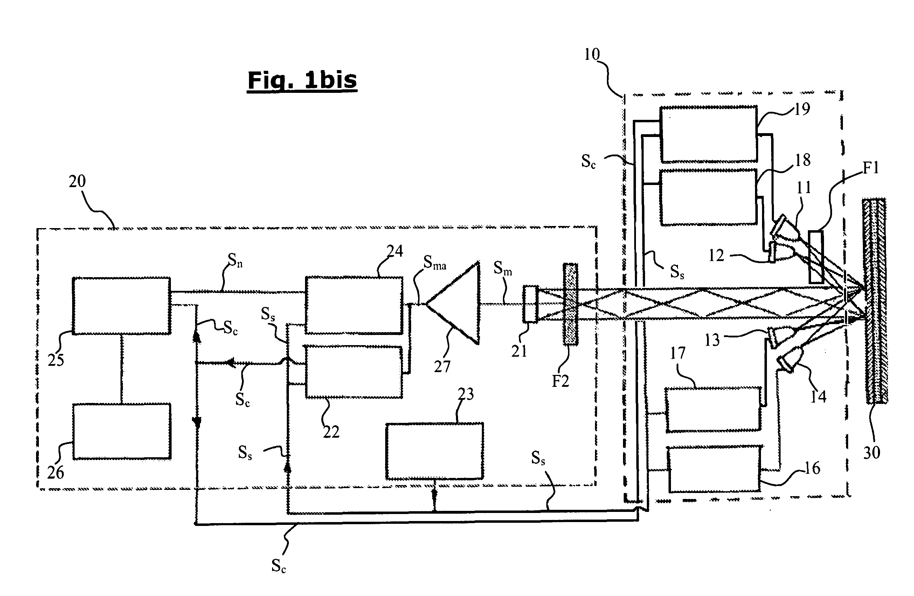

- la figure 1 est une représentation schématique d'un premier mode de réalisation du système selon l'invention ;
- la figure 1bis est une représentation schématique d'un deuxième mode de réalisation du système selon l'invention ;
- la figure 2 est une représentation schématique du principe de mesure, dans le premier mode de réalisation du système selon l'invention ;

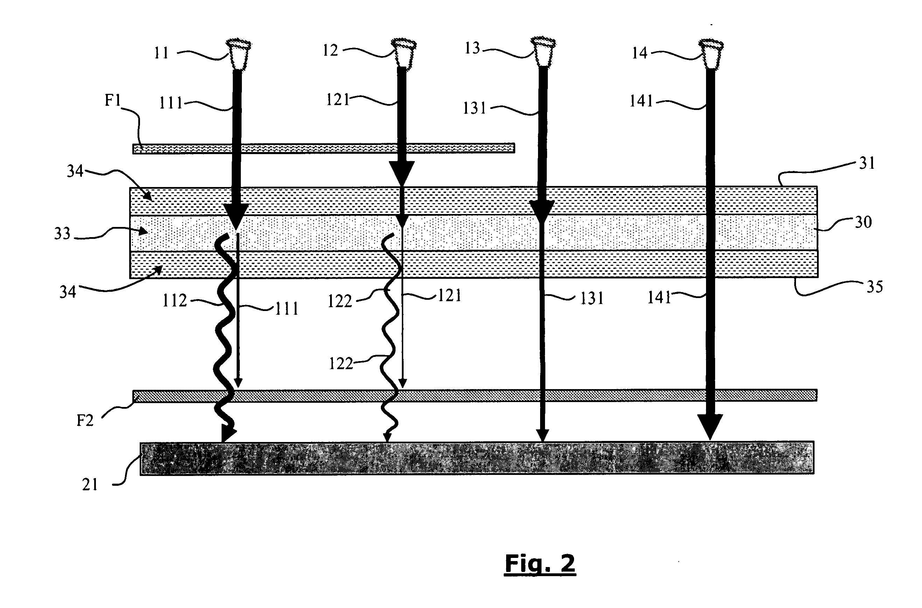

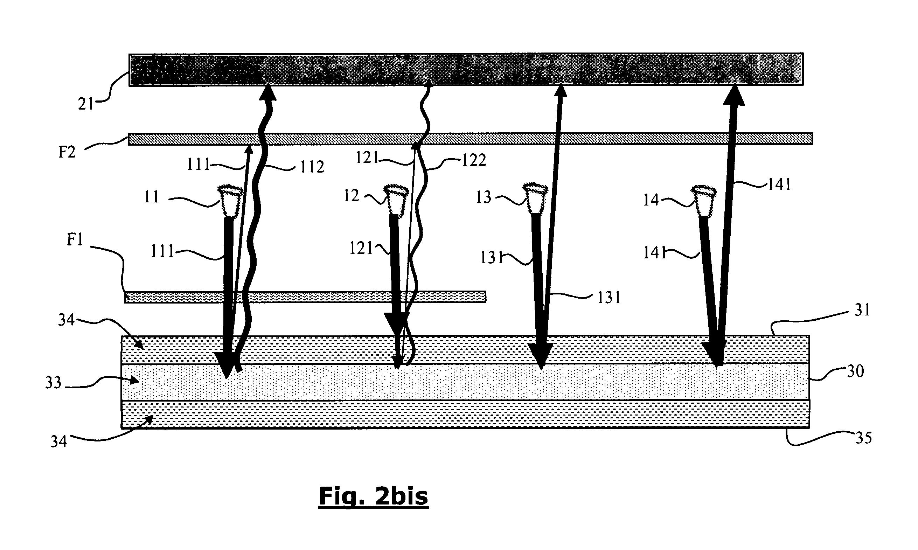

- la figure 2bis est une représentation schématique du principe de mesure, dans le deuxième mode de réalisation du système selon l'invention ;

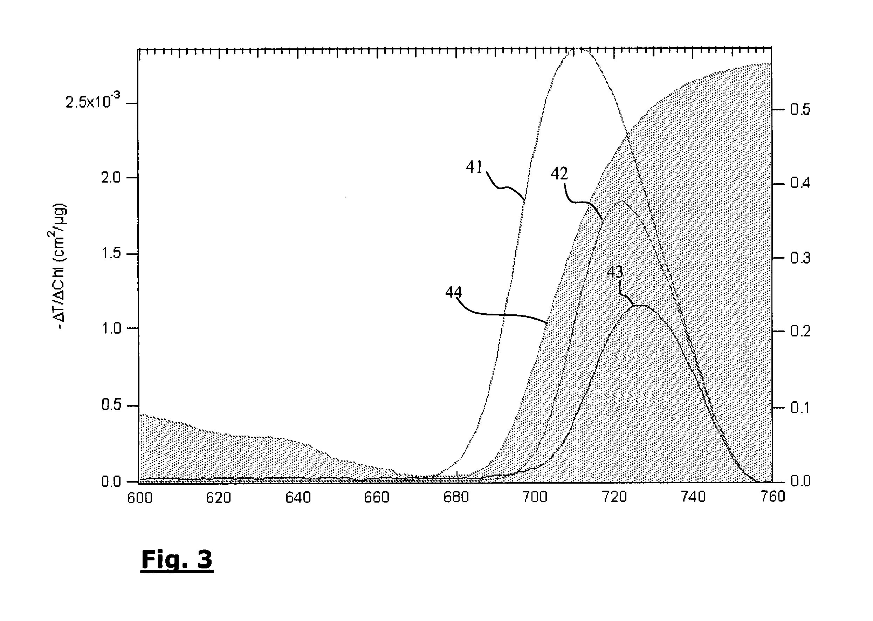

- la figure 3 est une représentation des sensibilités de mesure obtenues avec différents composants pouvant être mis en oeuvre dans le système selon l'invention ;

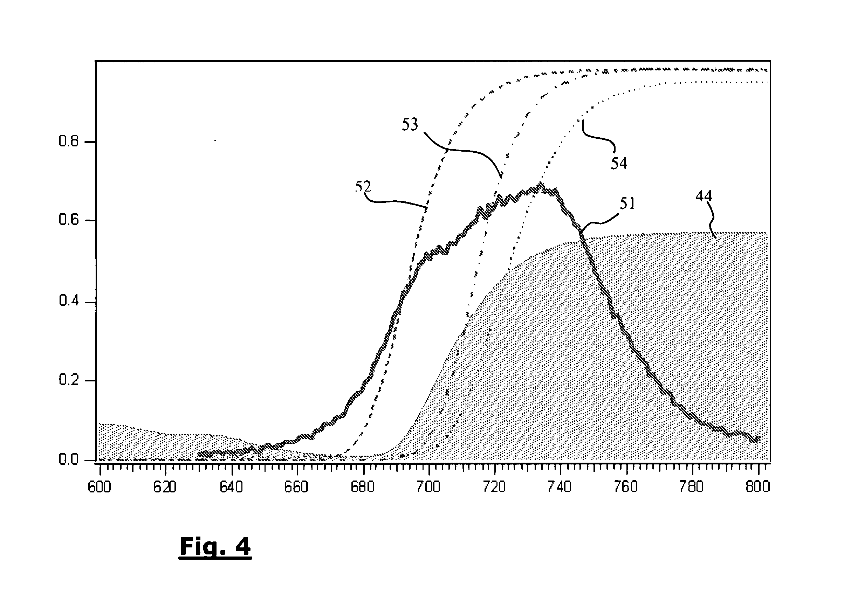

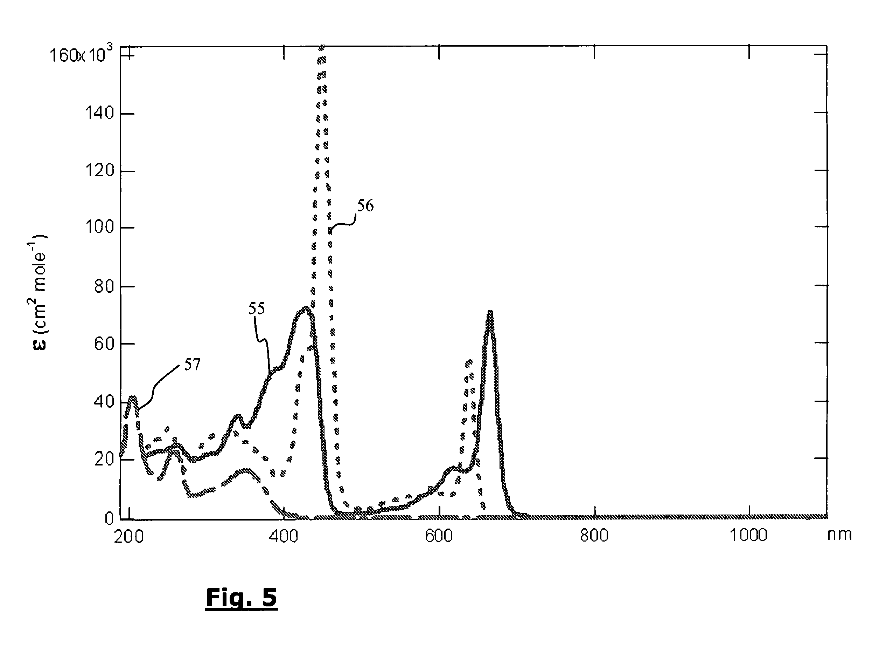

- les figures 4 et 5 sont des représentations des spectres de fluorescence et de transmittance d'une feuille végétale ainsi que des différents composants pouvant être mis en oeuvre dans le système selon l'invention ; et

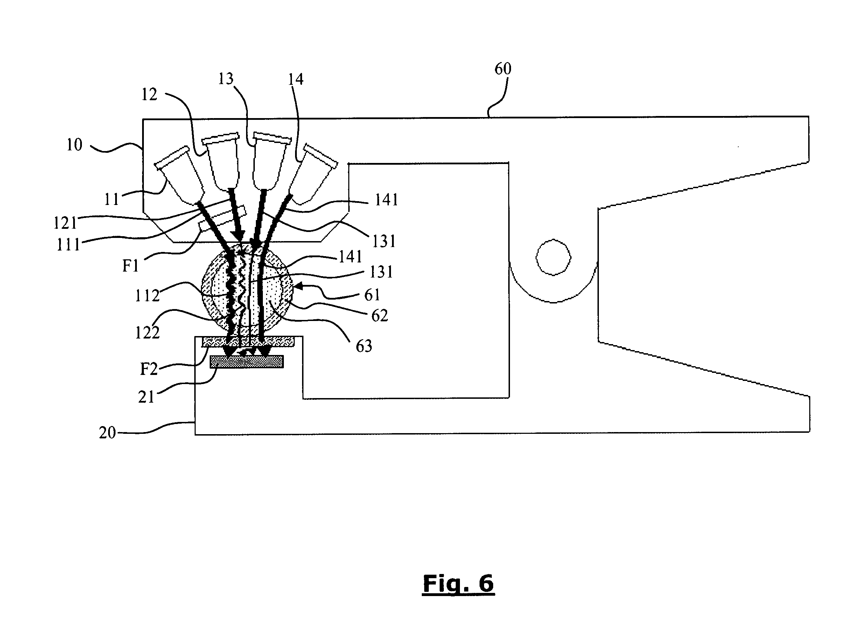

- la figure 6 est une représentation schématique d'un système selon l'invention selon le premier mode de réalisation, pour la caractérisation de la peau d'une baie de raisin.

L'exemple de réalisation non limitatif que nous allons décrire ci-dessous concerne un système de mesure conjointe du contenu d'une feuille végétale en chlorophylle, composé chromophore et fluorescent, et en polyphénols, second composé chromophore. La mesure des polyphénols se fait par la méthode de la fluorescence de la chlorophylle décrite dans le document FR 2 830 325. La mesure de la chlorophylle se fait par la mesure d'absorption différentielle de la chlorophylle.

Les figures 1 et 1bis donnent deux modes de réalisation d'un tel système de mesure conjointe du contenu d'une feuille végétale en chlorophylle et en polyphénols. Dans ces deux modes de réalisation, le système se présente sous la forme de deux parties : une partie émettrice 10 et une partie réceptrice 20. Dans le premier mode de réalisation représenté en figure 1, les parties émettrice 10 et réceptrice 20 sont disposées de part et d'autre de l'échantillon de feuille végétale 30, alors que dans le deuxième mode de réalisation représenté en figure 1bis, les parties émettrice 10 et réceptrice 20 sont disposées du même coté de l'échantillon de feuille végétale 30.

Quelque soit le mode de réalisation, la partie émettrice 10 comprend quatre sources de rayonnement 11, 12, 13, 14 éclairant la face avant d'un échantillon de feuille végétale 30. Chacune de ces sources 11-14 est associée à une alimentation pulsée 16-19, telle que montrée sur les figures 1 et 1bis, et commandée par un signal de synchronisation Ss. Les sources 11, 12 servent à la mesure de la teneur en polyphénols de la feuille 30 et sont prévues pour induire la fluorescence de la chlorophylle. Les deux autres sources 13, 14 servent à la mesure de l'absorption due à la chlorophylle et donc à la détermination de la teneur en chlorophylle de l'échantillon 30. La partie émettrice 10 comprend en outre un filtre optique F1 situé entre les sources 11 et 12 et l'échantillon 30.

La partie réceptrice 20 du système selon l'invention comprend un détecteur 21, préférentiellement une photodiode au silicium fournissant un signal électrique en fonction des rayonnements détectés, associé à un filtre optique F2, disposé entre l'échantillon 30 et le détecteur 21. La fonction de ce filtre F2 est de :

- bloquer le passage des rayonnements des sources d'excitation 11 et 12 vers le détecteur 21,
- transmettre partiellement ou totalement la partie non absorbée par la chlorophylle des rayonnements des deux autres sources 13 et 14, et
- transmettre également partiellement ou totalement l'émission de la fluorescence de la chlorophylle induite par les rayonnements optiques émis par les sources 11 et 12.

Le filtre F1 est prévu pour améliorer la pureté spectrale des rayonnements émis par les sources 11 et 12 et de bloquer tout rayonnement issu de ces sources qui correspondrait à la bande de sensibilité du filtre F2.

La partie réceptrice 20 du système comprend en outre un bloc de commande et de contrôle 22 et un bloc de synchronisation 23 des alimentations 16-19 et donc des sources 11-14. Le système comprend également dans la partie réceptrice un bloc de mesure et de conversion 24, un bloc de calcul 25 comprenant des moyens de calcul relié à un ou plusieurs périphériques 26 comprenant des moyens de mémorisation, des moyens de transmission des données, ainsi qu'une interface avec l'utilisateur comme un affichage et un clavier. Enfin la partie réceptrice 20 du système selon l'invention comprend des moyens d'amplification 27 du signal électrique fourni par le détecteur 21.

Les sources 12, 13, 14 ont une intensité fixe, préprogrammée ou réglable par l'utilisateur. L'intensité de la source 11 est variable et est sous le contrôle du bloc de commande 22. Le bloc de commande 22 agit sur l'alimentation 19 par l'intermédiaire d'un signal de commande Sc pour ajuster l'intensité de la source 11 de manière à ce que la fluorescence de la chlorophylle induite par cette source 11 soit égale à la fluorescence de la chlorophylle induite par la source 12. La mise en route des sources 11-14 est contrôlée par un bloc de synchronisation 23, comprenant des moyens électroniques de synchronisation, agissant sur les alimentations 16-19 par l'intermédiaire du signal de synchronisation Ss.

Les figures 2 et 2bis sont des représentations schématiques du principe de mesure et des trajets optiques des différents rayonnements, respectivement dans le premier et le deuxième mode de réalisation. En référence aux figures 2 et 2bis, les quatre sources 11-14, sont préférentiellement des diodes électroluminescentes (LED) et éclairent la même face 31 de la feuille 30. Les sources 11 et 12 sont prévues pour émettre deux rayonnements, respectivement 111 et 121, destinés à induire la fluorescence de la chlorophylle 33 et induire deux rayonnements fluorescents, respectivement 112 et 122. Les deux autres sources 13, 14 sont prévus pour émettre deux rayonnements, respectivement 131 et 141, destinés à être partiellement absorbés, mais en quantités différentes, par la feuille 30, et plus précisément par la chlorophylle 33.

La figure 2 représente :

- les rayonnements fluorescents 112 et 122 émis par la chlorophylle vers le côté opposé aux sources 11 et 12, et
- la partie transmise des rayonnements 131 et 141.

Dans le premier mode de réalisation la partie réceptrice 20 du système se trouvant du côté opposé de la feuille par rapport à la partie émettrice 10, ce sont les rayonnements émis vers le côté opposé aux sources 11-14 qui seront détectés par le détecteur 21. En effet, dans ce premier mode de réalisation, le détecteur 21 est prévu pour détecter, d'une part la fluorescence émise vers la face arrière 35 de la feuille pour mesurer la teneur en polyphénols 34, et détectent également la transmittance de la feuille 30 qui permet de déterminer la teneur en chlorophylle 33.

La figure 2bis représente :

- les rayonnements fluorescents 112 et 122, induits par les rayonnements 111 et 121, et émis par la chlorophylle vers les sources 11 et 12, et
- la partie réfléchie des rayonnements 131 et 141.

Dans le deuxième mode de réalisation la partie réceptrice 20 du système se trouvant du même côté de la feuille que la partie émettrice 10, ce sont les rayonnements émis vers les sources qui seront détectés par le détecteur 21. En effet, dans ce deuxième mode de réalisation, le détecteur 21 est prévu pour détecter, d'une part la fluorescence émise vers la face avant 31 de la feuille pour mesurer la teneur en polyphénols 34, et d'autre part la partie réfléchie par la feuille (30) des rayonnements 131 et 141 pour mesurer la réflectance de la feuille 30 qui permet de déterminer la teneur en chlorophylle 33.

Le premier et le deuxième mode de réalisation sont sensiblement équivalents car, dans un tissu biologique, réflectance et transmittance sont corrélées.

Quelque soit le mode de réalisation, les longueurs d'onde de chacune des sources 11-14 sont choisies en fonction des bandes d'absorption des composés à mesurer, de leurs caractéristiques techniques comme la pureté spectrale ou leur puissance, de leur disponibilité commerciale et de leur coût, et de la disponibilité commerciale et du coût du ou des filtres F2 associés au détecteur 21.

Pour la mesure conjointe des polyphénols 34 et de la chlorophylle 33 de la feuille 30, le détecteur 21 est une photodiode au silicium. Le filtre F2 est un filtre coloré RG715 de 3 mm de chez Schott (Allemagne). La bande spectrale de transmission d'un tel filtre est de 720 nm (mi-hauteur, 45% de transmission) à 900 nm et au delà.

La source 11 émet un rayonnement 111 dans le rouge, où les polyphénols 34 n'absorbent pas, qui induit la fluorescence de la chlorophylle 33 et provoque l'émission d'un rayonnement de fluorescence 112, et qui sert de référence pour la mesure de l'absorption par les polyphénols 34. La longueur d'onde de cette source est préférentiellement à 650 nm, ce qui permet d'éviter l'absorption par les anthocyanes, et constitue un point isosbestique des spectres d'absorption des chlorophylles a et b. La source 12 est une source émettant un rayonnement 121 dans l'ultraviolet, dont la longueur d'onde se situe dans une bande d'absorption des polyphénols 34 et qui induit la fluorescence de la chlorophylle 33 et provoque l'émission d'un rayonnement de fluorescence 122. La longueur d'onde de cette source 12 peut par exemple être autour de 370 nm. Des exemples de sources UV sont la diode NS370L ou la UVLED370-10 de chez Roithner Lasertechnik.

Les sources 11 et 12 éclairent successivement la feuille 30 par émission respectivement d'un rayonnement 111 et 121. Le rayonnement ultraviolet 121 est absorbé en quantité variable par l'épiderme de la feuille suivant son contenu en polyphénols 34, tandis que le rayonnement rouge 111 ne l'est pas. Ces rayonnements 111 et 121 induisent la fluorescence de la chlorophylle 33 qui émet alors respectivement des rayonnements de fluorescence 112 et 122 dans le rouge et le proche infrarouge, dont les intensités sont proportionnelles aux intensités des rayonnements 111 et 121 reçues par la chlorophylle 33. Les rayonnements de fluorescence 112 et 122 sont émis d'une part vers la face avant 31 (figure 2bis) et d'autre part vers la face arrière 35 (figure 2) de la feuille 30. La mesure du rapport des émissions de fluorescence excitées par la source 11 et par la source 12 permet de déterminer la transmittance de l'épiderme, et par là son contenu ou sa teneur en polyphénols par la relation :

$$phen = C_0 \; \log\left(\frac{F_R}{F_{UV}}\right) \qquad (1)$$

où phen est le contenu en polyphénols de l'épiderme de la feuille 30 en nanomoles/cm$^2$, $C_0$ une constante et $F_R$ et $F_{UV}$ sont les intensités de rayonnements de fluorescence 112 et 122 émis par la chlorophylle excitée par les sources 11 et 12.

La source 13 est une source émettant un rayonnement 131 à 720 nm, à la limite de la bande passante du filtre F2 de détection. Ce rayonnement est en partie absorbé par la chlorophylle et la partie non absorbée se propage d'une part vers la face avant 31 de la feuille, telle que montrée sur la figure 2bis et d'autre part vers la face arrière 35 de la feuille, telle que montrée sur la figure 2.

La source 14 est une source émettant un rayonnement 141 à 780 nm ou au delà. Ce rayonnement 141 n'est presque pas ou peu absorbé par la chlorophylle 33, et la partie non absorbée se propage vers la face avant 31 (figure 2bis) et vers la face arrière 35 (figure 2) de la feuille 30. La source 14 sert de référence pour la mesure du contenu en chlorophylle 33 de la feuille 30. Le différentiel des intensités de la partie non absorbée des rayonnements 131 et 141, respectivement à 720 et 780 nm, permet d'estimer le contenu en chlorophylle par la relation :

$$chl = C_2 \left[ \log\left(\frac{I_{780}}{I_{720}}\right) - C_1 \right] \qquad (2)$$

où $chl$ est le contenu de la feuille 30 en chlorophylle en $\mu$g/cm$^2$, $C_1$ et $C_2$ des constantes et $I_{780}$ et $I_{720}$ sont respectivement les intensités de la partie non absorbée des rayonnements 141 et 131 par la chlorophylle 33.

Chacun des rayonnements de fluorescence 122 et 112 ainsi que chacune des parties non absorbées des rayonnements 131 et 141, est détecté au moins en partie, par le détecteur 21 qui génère un signal électrique $S_m$ proportionnel à l'intensité du rayonnement détecté. Ce signal électrique $S_m$ est ensuite amplifié par les moyens d'amplification 27 qui fournissent un signal électrique amplifié $S_{ma}$, d'une part au bloc de mesure et de conversion 24, et d'autre part au bloc de commande et de contrôle 22. Le bloc de mesure et de conversion 24 réalise une conversion analogique-numérique du signal $S_{ma}$ fournissant un signal numérique $S_n$ au bloc de calcul 25.

Le bloc de commande et de contrôle 22 génère un signal de commande $S_c$ en fonction du signal numérique amplifié $S_{ma}$. Ce signal de commande $S_c$ est ensuite utilisé pour ajuster l'intensité du rayonnement 111 émis par la source 11. Ce signal $S_c$ est fonction à la fois des intensités des rayonnements de fluorescence 112 et 122 de la chlorophylle induits par les rayonnements 111 et 121 émis respectivement par les sources 11 et 12. Tel que décrit plus haut, ce signal de commande $S_c$ est généré de manière à ce que les intensités des rayonnements de fluorescence 112 et 122 induits par les rayonnements 111 et 121 soient égales.

Le signal de commande $S_c$ est aussi fourni au bloc de calcul 25, qui en fonction du signal $S_n$ et du signal de commande $S_c$ réalise le calcul de la teneur en chlorophylle 33 et en polyphénols 34 de la feuille 30.

Le bloc de synchronisation 23 permet de synchroniser l'ensemble du système par l'intermédiaire d'un signal de synchronisation $S_s$ fourni aux sources 16-19, au bloc de mesure et de conversion 24 et au bloc de contrôle et de commande 22.

Le rapport chlorophylle/polyphénols peut ensuite être déterminé par le bloc de calcul 25. Il a été démontré que ce rapport est caractérisé par des zones de stabilité le long de la feuille 30 et a un meilleur pouvoir discriminateur du besoin en azote de la plante alors que les polyphénols ou la chlorophylle, pris isolément, varient à la fois le long de la feuille et en fonction de la dose d'azote apportée. Ainsi le rapport chlorophylle/polyphénols est un indicateur important pour la gestion des cultures.

D'autres combinaisons spectrales des sources 11-14, des filtres F1 et F2 et du détecteur peuvent être envisagées suivant :

- le composé à mesurer par fluorescence : une excitation dans le bleu (450 nm), le vert (530 nm) ou le jaune ambre (590 nm) à la place de l'ultraviolet permet de mesurer les anthocyanes ; et
- le filtre coloré F2 : un filtre comme le RG695 (Schott, Allemagne) permet d'utiliser une source 13 autour de 710 nm, ou un filtre comme le RG9 permet d'utiliser une source 13 autour 730 nm. Dans le premier cas, il peut être alors préférable d'utiliser une autre longueur d'onde pour la source 12 qui peut alors émettre autour de 620 ou 630 nm.

La figure 3 montre la sensibilité $-\Delta T/\Delta Chl$ en cm$^2$/$\mu$g de la mesure du contenu en chlorophylle 33 de la feuille 30 en fonction de la longueur d'onde, en nm, et du filtre F2 utilisé. Les sensibilités sont obtenues par simulation avec le modèle Prospect, tel que décrit par Stéphane Jacquemoud et Frédéric Baret dans «PROSPECT: A Model of Leaf Optical Properties Spectra », Remote Sens. Environ., 1990. 34: p. 75-91. Pour une valeur moyenne de variation du contenu en chlorophylle entre 40 et 80 $\mu$g/cm$^2$, la sensibilité 41 obtenue avec un filtre F2 type RG695 et une source 13 à 710 nm est supérieure à la sensibilité 42 obtenue avec un filtre F2 type RG715 et une source à 720 nm, qui elle-même est supérieure à la sensibilité 43 avec un filtre F2 type RG9 et une source 13 à 730 nm. Sur cette figure on a également la bande de transmittance 44 de la feuille 30.

Pour une visualisation et une comparaison plus simple des différentes longueurs d'ondes mis en jeu dans les exemples donnés ci-dessus, les figures 4 et 5 donnent la bande de fluorescence 51 de la face arrière 35 de la feuille 30, la bande de transmittance 44 de la feuille 30, la bande spectrale 52 du filtre RG695, la bande spectrale 53 du filtre RG715, la bande spectrale 54 du filtre RG9, ainsi que les bandes d'absorption 55, 56 et 57 respectivement de la chlorophylle de type a, de la chlorophylle de type b et de la quercétine qui est un polyphénol.

Dans tous les cas décrits ci-dessus, les mesures se font suivant le mode opératoire décrit ci-après. Dans un premier temps, on actionne alternativement les sources 11 et 12 pour induire la fluorescence de la chlorophylle. Le rapport des intensités de fluorescence est mesuré comme décrit dans le document FR 2 830 325. On maintient fixe l'intensité de la source 12 et on ajuste l'intensité de la source 11 de référence de manière à ce que les intensités de fluorescence émises par la feuille soient égales. La puissance optique émise par la source de référence 11 permet alors de déterminer le contenu en polyphénols de la feuille 30.

Dans un deuxième temps, les sources de mesure de la chlorophylle sont actionnées alternativement et on mesure les intensités des parties non absorbées par la feuille des rayonnements 13 et 14. Ce qui permet d'en déduire le contenu en chlorophylle par la relation (2) ci-dessus.

Il a été constaté de manière tout à fait surprenante que, dans le premier mode de réalisation où les parties émettrice 10 et réceptrice 20 se trouvent de part et d'autre du tissu biologique à caractériser, le système selon l'invention peut être mis en oeuvre pour la caractérisation d'un tissu épais ou du tissu biologique d'une entité biologique épaisse en insérant directement l'entité biologique entre les parties émettrice 10 et réceptrice 20. Dans ce cas, la caractérisation du tissu biologique d'une entité peut se faire directement sur au moins une partie de l'entité biologique sans avoir à réaliser un prélèvement de tissu. Le système selon l'invention permet, par exemple, de réaliser une caractérisation d'un tissu biologique directement sur des tiges, des graines, des fruits entiers ou des morceaux de fruits. Parmi les fruits dont la caractérisation peut être réalisée par le système selon l'invention, on peut citer de manière non limitative, les prunes, les cerises, les olives, les baies comme le raisin, le cassis, les groseilles. Ainsi, dans le premier mode de réalisation, le système selon l'invention permet de réaliser une caractérisation d'un tissu biologique de manière plus rapide, moins complexe, et moins coûteuse.

De manière générale, des essais ont montré que les mesures traversantes réalisées sur un tissu biologique d'une entité biologique, pour mesurer :

- la teneur en un composé chromophore et fluorescent du tissu,
- la teneur en un composé chromophore peu ou pas fluorescent du tissu, ou
- les deux

peuvent être réalisées directement sur l'entité ou sur au moins une partie épaisse de l'entité comportant le tissu. Ces mesures peuvent aussi être réalisées sur des tissus épais. Ainsi, les systèmes de mesures intégrant les mesures traversantes peuvent être utilisés sur des tissus épais ou directement sur les entités insérées entre la partie émettrice et la partie réceptrice de ces systèmes. A titre d'exemple non limitatif, les mesures traversantes décrites dans le brevet FR 2 830 325 peuvent être réalisées directement sur l'entité biologique dont on veut caractériser le tissu.

Dans le premier mode de réalisation, le système selon l'invention peut se présenter sous la forme d'une pince 60, tel que représentée en figure 6, présentant d'un côté la partie émettrice 10 et de l'autre la partie réceptrice 20. Le tissu biologique à caractériser, ou l'entité biologique dont le tissu est à caractériser, est directement inséré entre les deux parties de la pince. A titre d'exemple, la figure 6 montre l'utilisation de la pince 60 pour la caractérisation d'une baie de raisin 61. Une des faces externes de la baie reçoit les rayonnements 111,121,131,141 issus des sources 11,12,13,14 qui sont partiellement absorbés, mais en quantités différentes, par la peau 62 de la baie. Les rayonnements de fluorescence 112 et 122 induits par les rayonnements 111 et 121, ainsi que la partie transmise des rayonnements 131 et 141 sont détectés sur la face externe opposée par le détecteur 21, après la traversée de la pulpe 63. Le composé chromophore et fluorescent mesuré est la chlorophylle et le second composé chromophore est, soit un composé de la famille des phénylpropanoïdes dans une première variante, soit un composé de la famille des anthocyanes dans une deuxième variante. Ainsi, les rayonnements utilisés peuvent avoir des longueurs d'onde choisies autour des valeurs suivantes :

- le premier rayonnement : 650 nm ;
- le deuxième rayonnement : 370 nm pour la mesure d'un composé de la famille des phénylpropanoïdes, 530 ou 590 nm pour la mesure d'un composé de la famille des anthocyanes ;

- le troisième rayonnement : 720 nm ; et
- le quatrième rayonnement : 780 nm.

Bien entendu, la pince 60 comprend des moyens de contrôle et de commande, des moyens de synchronisation ou des moyens de modulation décrits plus haut non représentés sur la figure 6.

Le deuxième mode de réalisation du système selon l'invention peut se présenter sous la forme d'un dispositif portable ou embarqué sur une machine quelconque dans le domaine de l'agriculture de précision et du biomédical.

On peut envisager deux applications importantes, non limitatives, du système selon l'invention dans ce deuxième mode de réalisation :

- l'estimation sans contact ou à distance des besoins en azote d'une culture, avec un dispositif portable ou embarqué sur une machine agricole, dans le but de piloter les pratiques culturales, notamment en agriculture de précision,
- la caractérisation in vivo d'un tissu animal ou humain, et notamment la détection précoce des tumeurs, la mesure conjointe de dérivés de l'hémoglobine comme la protoporphyrine IX (pics d'émission à 630 et 690 nm) comme composé chromophore et fluorescent et de la mélanine comme composé chromophore.

L'invention permet avantageusement :

- de réaliser une mesure de la teneur en composé chromophore et fluorescent et en second composé chromophore d'un tissu biologique avec un détecteur unique pour les deux mesures ;
- de miniaturiser le système pour obtenir un équipement portable, simple d'utilisation, autonome et de faible coût ;
- d'utiliser des diodes électroluminescentes comme sources de rayonnement ;
- de minimiser l'encombrement autour du point de mesure tout en optimisant le couplage optique par une configuration où les sources de rayonnement sont placées en face avant et le détecteur en face arrière du tissu biologique ;
- d'optimiser la combinaison des longueurs d'onde des sources de rayonnement et la bande de sensibilité du détecteur pour faire une mesure précise et sensible ; et
- d'utiliser un filtre coloré d'usage courant en optique disposé entre le détecteur et le tissu biologique.

L'invention n'est pas limitée à l'exemple détaillé ci-dessus et peut être utilisée pour caractériser un tissu biologique de tout type.

## Revendications

1. Procédé pour caractériser un échantillon de tissu biologique (30) comprenant un premier composé chromophore et fluorescent (33) et un second composé chromophore (34), ledit procédé comprenant les étapes suivantes :

   - détermination, par mesure optique de fluorescence du composé chromophore et fluorescent (33), de la teneur en second composé chromophore (34) dudit échantillon (30), ladite détermination comprenant les opérations suivantes :

     - émission, par des premiers moyens d'émission (11,12) en direction dudit échantillon (30), d'un premier (111) et d'un deuxième (121) rayonnements optiques, de longueurs d'ondes différentes, chacun choisi de manière à induire un rayonnement de fluorescence (112,122) dudit composé chromophore et fluorescent (33), de sorte que l'un des premier et deuxième rayonnements est absorbé par le second composé chromophore et l'autre est peu ou pas absorbé par le second composé chromophore,
     - une première mesure, par des premiers moyens de mesure, desdits rayonnements de fluorescence (112,122) induits par lesdits premier et deuxième rayonnements (111, 121), et
     - détermination, à partir de ladite première mesure, de la teneur en second composé chromophore (34) dudit échantillon (30) ;

   - détermination, par mesure optique des caractéristiques d'absorption du composé chromophore et fluorescent (33), de la teneur en composé chromophore et fluorescent (33) dudit échantillon (30), ladite détermination comprenant les opérations suivantes :

     - émission, par des deuxièmes moyens d'émission (13,14) en direction dudit échantillon (30), d'un troisième (131) et d'un quatrième (141) rayonnement optique, de longueurs d'ondes différentes, de sorte que l'un des troisième et quatrième rayonnements est absorbé par le composé chromophore et fluorescent et l'autre est peu ou pas absorbé par le composé chromophore et fluorescent,

- une deuxième mesure, par des seconds moyens de mesure, d'au moins une partie non absorbée desdits troisième et quatrième rayonnements (131,141), et

- détermination, à partir de ladite deuxième mesure, de la teneur en composé chromophore et fluorescent (33) dudit échantillon (30) ;

**caractérisé en ce que** lesdits premiers moyens de mesure et lesdits seconds moyens de mesure comprennent des moyens de détection communs (21), ledit procédé comprenant en outre au moins un premier, filtrage, entre ledit échantillon (30) et les moyens de détection communs (21), ledit premier filtrage étant destiné à :

- bloquer le passage desdits premier et deuxième rayonnements (111,121), vers lesdits moyens de détection communs (21),

- autoriser, au moins en partie, le passage de la partie non absorbée desdits troisième et quatrième rayonnements (131,141) vers lesdits moyens de détection (21) communs, et

- autoriser, au moins en partie, le passage desdits rayonnements de fluorescence (112,122) induits par lesdits premier et deuxième rayonnements (111, 121) vers lesdits moyens de détection communs (21).

2. Procédé selon la revendication 1, **caractérisé en ce que** :

- la première mesure comprend au moins une mesure :

o du côté des premiers moyens d'émission, ou
o du côté opposé aux premiers moyens d'émission ; et

- la deuxième mesure comprend au moins une mesure :

o du côté des deuxièmes moyens d'émission, ou
o du côté opposé aux deuxièmes moyens d'émission.

3. Procédé selon l'une quelconque des revendications précédentes, **caractérisé en ce que** :

- le premier rayonnement (111) est choisi de manière à ce que sa longueur d'onde :

o n'est pas comprise dans une bande de longueurs d'onde d'absorption dudit second composé chromophore (34), et
o est comprise dans une bande de longueurs d'onde d'excitation du composé chromophore et fluorescent (33) ;

- le deuxième rayonnement (121) est choisi de manière à ce que sa longueur d'onde :

o est comprise dans une bande de longueurs d'onde d'absorption dudit second composé chromophore (34), et
o est comprise dans une bande de longueurs d'onde d'excitation du composé chromophore et fluorescent (33) ;

- le troisième rayonnement (131) est choisi de manière à ce que sa longueur d'onde :

o est comprise dans une bande de longueurs d'onde d'absorption dudit composé chromophore et fluorescent (33), et
o n'est pas comprise dans une bande de longueurs d'onde d'absorption du second composé chromophore (34) ; et

- le quatrième rayonnement (141) est choisi de manière à ce que sa longueur d'onde :

o n'est pas comprise dans une bande de longueurs d'ondes d'absorption du composé chromophore et fluorescent (33), et
o n'est pas comprise dans une bande de longueurs d'onde d'absorption du second composé chromophore (34).

**4.** Procédé selon l'une quelconque des revendications précédentes, **caractérisé en ce qu'**il comprend, entre les moyens d'émission (11-14) et l'échantillon (30), un second filtrage optique prévu pour bloquer une partie des rayonnements (11-14) émis en direction dudit échantillon (30).

**5.** Procédé selon l'une quelconque des revendications précédentes, **caractérisé en ce que** le deuxième rayonnement optique (121) est émis à une intensité prédéterminée et le premier rayonnement optique (111) est émis à une intensité variable de manière à ce que les rayonnements de fluorescence (112,122) induits par chacun desdits premier et deuxième rayonnements (111,121) soient égaux en intensité.

**6.** Procédé selon l'une quelconque des revendications précédentes, **caractérisé en ce que** les intensités du premier et du deuxième rayonnements (111,121) varient de manière alternée, en décalage de phase, à une fréquence prédéterminée, ainsi que les intensités du troisième et du quatrième rayonnements (131,141).

**7.** Procédé selon l'une quelconque des revendications précédentes, **caractérisé en ce qu'**il comprend en outre une étape de détermination d'une quantité proportionnelle au rapport entre la teneur en composé chromophore et fluorescent (33) et la teneur en second composé chromophore (34).

**8.** Utilisation du procédé selon l'une quelconque des revendications précédentes pour la caractérisation d'une feuille végétale (30) où le composé chromophore et fluorescent (33) est la chlorophylle et le second composé chromophore (34) comprend un composé de la famille des polyphénols ou des phénylpropanoïdes.

**9.** Utilisation selon la revendication 8, **caractérisé en ce que** :

- le premier rayonnement (111) a une longueur d'onde choisie autour de 650 nm ;
- le deuxième rayonnement (121) a une longueur d'onde choisie autour de 370 nm ;
- le troisième rayonnement (131) a une longueur d'onde choisie autour de 720 nm ; et
- le quatrième rayonnement (141) a une longueur d'onde choisie autour 780 nm.

**10.** Utilisation selon l'une quelconque des revendications 8 ou 9, **caractérisé en ce qu'**elle comprend en outre une détermination du besoin en azote de la plante en fonction de la teneur en chlorophylle et en polyphénols.

**11.** Système pour caractériser un échantillon de tissu biologique comprenant un premier composé chromophore et fluorescent (33) et un second composé chromophore (34), ledit système comprenant :

- des premiers moyens pour déterminer, par mesure optique de fluorescence du composé chromophore et fluorescent (33), la teneur en second composé chromophore (34) dudit échantillon (30), lesdits premiers moyens comprenant :

- des premiers moyens d'émission (11,12) en direction dudit échantillon, d'un premier (111) et d'un deuxième (121) rayonnements optiques, de longueurs d'onde différentes, chacun choisi de manière à induire un rayonnement de fluorescence (112, 122) dudit composé chromophore et fluorescent (33), de sorte que l'un des premier et deuxième rayonnements est absorbé par le second composé chromophore et l'autre est peu ou pas absorbé par le second composé chromophore,
- des premiers moyens de mesure, pour mesurer lesdits rayonnements de fluorescence (112,122) induits par lesdits premier et deuxième rayonnements (111,121),
- des moyens de calcul pour déterminer (25), à partir de la mesure desdits rayonnements fluorescences (112,122), la teneur en second composé chromophore (34) dudit échantillon (30) ; et

- des deuxièmes moyens pour déterminer, par mesure optique des caractéristiques d'absorption du composé chromophore et fluorescent (33), la teneur en composé chromophore et fluorescent (33) dudit échantillon (30), lesdits deuxième moyens comprenant :

- des deuxièmes moyens d'émission (13,14) en direction dudit échantillon (30), d'un troisième (131) et d'un quatrième (141) rayonnements optiques, de longueurs d'onde différentes, de sorte que l'un des troisième et quatrième rayonnements est absorbé par le composé chromophore et fluorescent et l'autre est peu ou pas absorbé par le composé chromophore et fluorescent,
- des deuxièmes moyens de mesure, pour mesurer au moins une partie non absorbée desdits troisième et quatrième rayonnements (131,141), et

- des moyens de calcul (25) pour déterminer, à partir de ladite mesure d'au moins une partie non absorbée desdits troisième et quatrième rayonnements (131,141), la teneur en composé chromophore et fluorescent (33) dudit échantillon (30).

**caractérisé en ce que** lesdits premiers moyens de mesure et lesdits seconds moyens de mesure comprennent des moyens de détection communs (21), ledit système comprenant en outre des premiers moyens de filtrage (F2), disposés entre ledit échantillon (30) et lesdits moyens de détection communs, lesdits premiers moyens de filtrage (F2) étant destinés à :

- bloquer, le passage desdits premier et deuxième rayonnements (111,121), vers lesdits moyens de détection communs (21),
- autoriser, au moins en partie, le passage de la partie non absorbée desdits troisième et quatrième rayonnements (131,141) vers lesdits moyens de détection communs (21), et
- autoriser, au moins en partie, le passage desdits rayonnements de fluorescence (112,122) induits par lesdits premier et deuxième rayonnements (111, 121) vers lesdits moyens de détection communs (21).

**12.** Système selon la revendication 11, **caractérisé en ce que** :

- les moyens de détection, et les premiers et les deuxièmes moyens d'émission sont disposés du même coté de l'échantillon de tissu, ou
- les moyens de détection sont disposés d'un coté de l'échantillon du tissu et les premiers et les deuxièmes moyens d'émission sont disposés de l'autre coté dudit échantillon.

**13.** Système selon l'une quelconque des revendications 11 ou 12, **caractérisé en ce qu'**il comprend en outre, entre les moyens d'émission (11-14) et l'échantillon (30), des second moyens de filtrage (F1) prévus pour bloquer au moins une partie des rayonnements (111,121,131,141) émis en direction dudit échantillon (30).

**14.** Système selon l'une quelconque des revendications 11 à 13, **caractérisé en ce qu'**il comprend en outre des moyens de contrôle et de commande (24) fournissant un signal de commande ($S_c$) vers les premiers moyens d'émission (11,12) de sorte que les rayonnements de fluorescence (112,122) du composé chromophore et fluorescent (33) induits par le premier et le deuxième rayonnement (111,121) soient sensiblement égaux en intensité.

**15.** Système selon l'une quelconque des revendications 11 à 14, **caractérisé en ce qu'**il comprend en outre des moyens de calcul (26) pour déterminer une quantité proportionnelle au rapport entre la teneur en composé chromophore et fluorescent (33) et la teneur en second composé chromophore (34).

**Claims**

**1.** Method for characterizing a sample of biological tissue (30) comprising a first chromophorous and fluorescent compound (33) and a second chromophorous compound (34), said method comprising the following steps:

- determination, by optical measurement of fluorescence of the chromophorous and fluorescent compound (33), of the content of the second chromophorous compound (34) in said sample (30), said determination comprising the following steps:

- emission, by first means of emission (11, 12) towards said sample (30), of a first (111) and of a second (121) optical radiation, of different wavelengths, each chosen so as to induce a radiation of fluorescence (112, 122) of said chromophorous and fluorescent compound (33), such that one of the first and second radiations is absorbed by the second chromophorous compound and the other is only slightly or not at all absorbed by the second chromophorous compound,
- a first measurement, by first measurement means, of said radiations of fluorescence (112, 122) induced by said first and second radiations (111, 121), and
- determination, from said first measurement, of the content of the second chromophorous compound (34) in said sample (30);

- determination, by optical measurement of the absorption characteristics of the chromophorous and fluorescent compound (33), of the content of the chromophorous and fluorescent compound (33) in said sample (30), said determination comprising the following operations:

- emission, by second means of emission (13, 14) towards said sample (30), of a third (131) and of a fourth (141) optical radiation, of different wavelengths, such that one of the third and fourth radiations is absorbed by the chromophorous and fluorescent compound and the other is only slightly or not at all absorbed by the chromophorous and fluorescent compound,

- a second measurement, by second measurement means, of at least one unabsorbed part of said third and fourth radiations (131, 141), and

- determination, from said second measurement, of the content of the chromophorous and fluorescent compound (33) in said sample (30);

**characterized in that** said first measurement means and said second measurement means comprise shared detection means (21), said method also comprising at least one first filtering, between said sample (30) and the shared detection means, (21), said first filtering being intended to:

- block said first and second radiations (111, 121) from passing through to said shared detection means (21),

- allow, at least partly, the unabsorbed part of said third and fourth radiations (131, 141) to pass through to said shared detection means, (21), and

- allow, at least partly, said radiations of fluorescence (112, 122) induced by said first and second radiations (112, 121) to pass through to said shared detection means (21).

2. Method according to claim 1, **characterized in that**:

- the first measurement comprises at least one measurement:

  o on the side of the first emission means, or
  o on the side opposite to the first emission means; and

- the second measurement comprises at least one measurement:

  o on the side of the second emission means, or
  o on the side opposite to the second emission means.

3. Method according to any one of the preceding claims, **characterized in that**:

- the first radiation (111) is chosen such that its wavelength:

  o is not comprised within an absorption wavelength band of said second chromophorous compound (34), and
  o is comprised within an excitation wavelength band of the chromophorous and fluorescent compound (33);

- the second radiation (121) is chosen such that its wavelength:
- is comprised within an absorption wavelength band of said second chromophorous compound (34), and
- is comprised within an excitation wavelength band of the chromophorous and fluorescent compound (33).
- the third radiation (131) is chosen such that its wavelength:

  o is comprised within an absorption wavelength band of said chromophorous and fluorescent compound (33), and
  o is not comprised in an absorption wavelength band of the second chromophorous compound (34);

- and the fourth radiation (141) is chosen such that its wavelength:

  o is not comprised in an absorption wavelength band of the chromophorous and fluorescent compound (33), and
  o is not comprised within an absorption wavelength band of the second chromophorous compound (34).

4. Method according to any one of the preceding claims, **characterized in that** it comprises, between the emission means (11-14) and the sample (30), a second optical filtering provided to block part of the radiations (11-14) emitted towards said sample (30).

5. Method according to any one of the preceding claims, **characterized in that** the second optical radiation (121) is emitted at a predetermined intensity and the first optical radiation (111) is emitted at a variable intensity so that the radiations of fluorescence (112, 122) induced by each of said first and second radiations (111, 121) are equal in intensity.

6. Method according to any one of the preceding claims, **characterized in that** the intensities of the first and second radiations (111, 121) vary alternately, with a phase shift, at a predetermined frequency, as well as the intensities of the third and fourth radiations (131, 141).

7. Method according to any one of the preceding claims, **characterized in that** it also comprises a step of determination of a quantity proportional to the ratio between the content of chromophorous and fluorescent compound (33) and the content of second chromophorous compound (34).

8. Use of the method according to any one of the preceding claims for the characterization of a plant leaf (30) where the chromophorous and fluorescent compound (33) is chlorophyll and the second chromophorous compound (34) comprises a compound of the family of the polyphenols or the phenylpropanoids.

9. Use according to claim 8, **characterized in that**:

   - the first radiation (111) has a wavelength chosen around 650 nm;
   - the second radiation (121) has a wavelength chosen around 370 nm;
   - the third radiation (131) has a wavelength chosen around 720 nm; and
   - the fourth radiation (141) has a wavelength chosen around 780 nm.

10. Use according to any one of claims 8 or 9, **characterized in that** it also comprises a determination of the nitrogen requirement of the plant as a function of the content of chlorophyll and polyphenols.

11. System for characterizing a sample of biological tissue comprising a first chromophorous and fluorescent compound (33) and a second chromophorous compound (34), said system comprising:

   - first means for determining, by optical measurement of fluorescence of the chromophorous and fluorescent compound (33), the content of the second chromophorous compound in the sample (34) in said sample (30), said first means comprising:

      - first means (11, 12) of emission towards said sample, of a first (111) and second (121) optical radiations, of different wavelengths, each chosen so as to induce a radiation of fluorescence (112, 122) of said chromophorous and fluorescent compound (33), such that one of the first and second radiations is absorbed by the second chromophorous compound and the other is only slightly or not at all absorbed by the second chromophorous compound,
      - first measurement means, for measuring said radiations of fluorescence (112, 122) induced by said first and second radiations (111, 121),
      - calculation means for determining (25), from the measurement of said radiations of fluorescence (112, 122), the content of second chromophorous compound (34) in said sample (30); and

   - second means for determining, by optical measurement of the absorption characteristics of the chromophorous and fluorescent compound (33), the content of chromophorous and fluorescent compound (33) in said sample (30), said second means comprising:

      - second means of emission (13, 14) towards said sample (30), of a third (131) and fourth (141) optical radiations, of different wavelengths, such that one of the third and fourth radiations is absorbed by the chromophorous and fluorescent compound and the other is only slightly or not at all absorbed by the chromophorous and fluorescent compound,
      - second measurement means, for measuring at least one unabsorbed part of the third and fourth radiations (131, 141), and
      - calculation means (25) for determining, from said measurement of at least one unabsorbed part of said third and fourth radiations (131, 141), the content of the chromophorous and fluorescent compound (33) in said sample (30);

   **characterized in that** said first measurement means and said second measurement means comprise shared detection means (21), said system also comprising first filtering means (F2), arranged between said sample (30) and said shared detection means, said first filtering means (F2) being intended to:

- block said first and second radiations (111, 121), from passing through to said shared detection means,
- allow, at least partly, the unabsorbed part of said third and fourth radiations (131, 141) to pass through to said shared detection means (21), and
- allow, at least partly, said radiations of fluorescence (112, 122) induced by said first and second radiations (111, 121) to pass through to said shared detection means (21).

12. System according to claim 11, **characterized in that**:

- the detection means, and the first and the second emission means are arranged on the same side of the tissue sample, or
- the detection means are arranged on one side of the tissue sample and the first and second emission means are arranged on the other side of said sample.

13. System according to any one of claims 11 or 12, **characterized in that** it also comprises, between the emission means (11-14) and the sample (30), second filtering means (F1) provided for blocking at least part of the radiations (111, 121, 131, 141) emitted towards said sample (30).

14. System according to any one of claims 11 to 13, **characterized in that** it also comprises command and control means (24) supplying a control signal ($S_c$) to the first emission means (11, 12) so that the radiations of fluorescence (112, 122) of the chromophorous and fluorescent compound (33) induced by the first and the second radiations (111, 121) are substantially equal in intensity.

15. System according to any one of claims 11 to 14, **characterized in that** it also comprises calculation means (26) for determining a quantity proportional to the ratio between the content of chromophorous and fluorescent compound (33) and the content of second chromophorous compound (34).

**Patentansprüche**

1. Verfahren zur Charakterisierung einer biologischen Gewebeprobe (30), die eine erste chromophore und fluoreszierende Verbindung (33) und eine zweite chromophore Verbindung (34) enthält, wobei das Verfahren die folgenden Schritte umfasst:

- Bestimmen des Gehaltes an zweiter chromophorer Verbindung (34) der Probe (30) mittels optischer Fluoreszenzmessung der chromophoren und fluoreszierenden Verbindung (33), wobei das Bestimmen die folgenden Vorgänge umfasst:
- Aussenden einer ersten (111) und einer zweiten (121) optischen Strahlung mit unterschiedlichen Wellenlängen, mittels erster Sendemittel (11, 12) in Richtung der Probe (30), wobei eine jede derart gewählt ist, dass eine Fluoreszenzstrahlung (112, 122) der chromophoren und fluoreszierenden Verbindung (33) induziert wird, so dass eine der ersten und zweiten Strahlungen von der zweiten chromophoren Verbindung absorbiert wird und die andere kaum oder gar nicht von der zweiten chromophoren Verbindung absorbiert wird,
- eine erste Messung der durch die erste und die zweite Strahlung (111, 121) induzierten Fluoreszenzstrahlungen (112, 122) mit Hilfe von ersten Messmitteln, und
- Bestimmen des Gehaltes an zweiter chromophorer Verbindung (34) der Probe (30) anhand der ersten Messung,
- Bestimmen des Gehaltes an chromophorer und fluoreszierender Verbindung (33) der Probe (30) mittels optischer Messung der Absorptionsmerkmale der chromophoren und fluoreszierenden Verbindung (33), wobei das Bestimmen die folgenden Vorgänge umfasst:
- Aussenden einer dritten (131) und einer vierten (141) optischen Strahlung mit unterschiedlichen Wellenlängen, mittels zweiter Sendemittel (13, 14) in Richtung der Probe (30), so dass eine der dritten und vierten Strahlungen von der chromophoren und fluoreszierenden Verbindung absorbiert wird und die andere kaum oder gar nicht von der chromophoren und fluoreszierenden Verbindung absorbiert wird,
- eine zweite Messung wenigstens eines nicht absorbierten Teils der dritten und der vierten Strahlung (131, 141) mit Hilfe von zweiten Messmitteln, und
- Bestimmen des Gehaltes an chromophorer und fluoreszierender Verbindung (33) der Probe (30) anhand der zweiten Messung,
**dadurch gekennzeichnet, dass** die ersten Messmittel und die zweiten Messmittel gemeinsame Detektionsmittel (21) umfassen, wobei das Verfahren ferner wenigstens eine erste Filterung zwischen der Probe (30) und den gemeinsamen Detektionsmitteln (21) umfasst, wobei die erste Filterung dazu bestimmt ist:

- den Durchgang der ersten und der zweiten Strahlung (111, 121) in Richtung der gemeinsamen Detektionsmittel (21) zu blockieren,
- den Durchgang des nicht absorbierten Teils der dritten und der vierten Strahlung (131, 141) in Richtung der gemeinsamen Detektionsmittel (21) wenigstens teilweise zuzulassen und
- den Durchgang der durch die erste und die zweite Strahlung (111, 121) induzierten Fluoreszenzstrahlungen (112, 122) in Richtung der gemeinsamen Detektionsmittel (21) wenigstens teilweise zuzulassen.

2. Verfahren nach Anspruch 1, **dadurch gekennzeichnet, dass**:

   - die erste Messung wenigstens eine Messung umfasst:

     - auf der Seite der ersten Sendemittel oder
     - auf der den ersten Sendemitteln gegenüberliegenden Seite,
     und

   - die zweite Messung wenigstens eine Messung umfasst:

     - auf der Seite der zweiten Sendemittel oder
     - auf der den zweiten Sendemitteln gegenüberliegenden Seite.

3. Verfahren nach einem der vorhergehenden Ansprüche, **dadurch gekennzeichnet, dass**:

   - die erste Strahlung (111) derart gewählt ist, dass ihre Wellenlänge:

     - nicht in einem Absorptionswellenlängenband der zweiten chromophoren Verbindung (34) liegt und

   - in einem Erregungswellenlängenband der chromophoren und fluoreszierenden Verbindung (33) liegt,
   - die zweite Strahlung (121) derart gewählt ist, dass ihre Wellenlänge:

     - in einem Absorptionswellenlängenband der zweiten chromophoren Verbindung (34) liegt und
     - in einem Erregungswellenlängenband der chromophoren und fluoreszierenden Verbindung (33) liegt,

   - die dritte Strahlung (131) derart gewählt ist, dass ihre Wellenlänge:

     - in einem Absorptionswellenlängenband der chromophoren und fluoreszierenden Verbindung (33) liegt und
     - nicht in einem Absorptionswellenlängenband der zweiten chromophoren Verbindung (34) liegt, und

   - die vierte Strahlung (141) derart gewählt ist, dass ihre Wellenlänge:

     - nicht in einem Absorptionswellenlängenband der chromophoren und fluoreszierenden Verbindung (33) liegt und
     - nicht in einem Absorptionswellenlängenband der zweiten chromophoren Verbindung (34) liegt.

4. Verfahren nach einem der vorhergehenden Ansprüche, **dadurch gekennzeichnet, dass** es zwischen den Sendemitteln (11-14) und der Probe (30) eine zweite optische Filterung umfasst, die vorgesehen ist, um einen Teil der in Richtung der Probe (30) ausgesandten Strahlungen (111-141) zu blockieren.

5. Verfahren nach einem der vorhergehenden Ansprüche, **dadurch gekennzeichnet, dass** die zweite optische Strahlung (121) mit einer vorbestimmten Intensität ausgesandt wird und die erste optische Strahlung (111) mit einer veränderlichen Intensität ausgesandt wird, so dass die durch eine jede der ersten und zweiten Strahlungen (111, 121) induzierten Fluoreszenzstrahlungen (112, 122) intensitätsgleich sind.

6. Verfahren nach einem der vorhergehenden Ansprüche, **dadurch gekennzeichnet, dass** die Intensitäten der ersten und der zweiten Strahlung (111, 121) - so wie die Intensitäten der dritten und der vierten Strahlung (131, 141) - abwechselnd phasenverschoben mit einer vorbestimmten Frequenz variieren.

7. Verfahren nach einem der vorhergehenden Ansprüche, **dadurch gekennzeichnet, dass** es ferner einen Schritt zum Bestimmen einer Menge, die zu dem Verhältnis zwischen dem Gehalt an chromophorer und fluoreszierender Verbindung (33) und dem Gehalt an zweiter chromophorer Verbindung (34) proportional ist, umfasst.

8.  Verwendung des Verfahrens nach einem der vorhergehenden Ansprüche, für die Charakterisierung eines Pflanzenblattes (30), in dem die chromophore und fluoreszierende Verbindung (33) Chlorophyll ist und die zweite chromophore Verbindung (34) eine Verbindung aus der Familie der Polyphenole oder der Phenylpropanoide umfasst.

9.  Verwendung nach Anspruch 8, **dadurch gekennzeichnet, dass**:

    - die erste Strahlung (111) eine Wellenlänge aufweist, die um 650 nm gewählt ist,
    - die zweite Strahlung (121) eine Wellenlänge aufweist, die um 370 nm gewählt ist,
    - die dritte Strahlung (131) eine Wellenlänge aufweist, die um 720 nm gewählt ist, und
    - die vierte Strahlung (141) eine Wellenlänge aufweist, die um 780 nm gewählt ist.

10. Verwendung nach einem der Ansprüche 8 oder 9, **dadurch gekennzeichnet, dass** sie ferner ein Bestimmen des Stickstoffbedarfs der Pflanze in Abhängigkeit des Gehaltes an Chlorophyll und an Polyphenolen umfasst.

11. System zur Charakterisierung einer biologischen Gewebeprobe, die eine erste chromophore und fluoreszierende Verbindung (33) und eine zweite chromophore Verbindung (34) enthält, wobei das System umfasst:

    - erste Mittel zum Bestimmen des Gehaltes an zweiter chromophorer Verbindung (34) der Probe (30) mittels optischer Fluoreszenzmessung der chromophoren und fluoreszierenden Verbindung (33), wobei die ersten Mittel umfassen:

        - erste Mittel zum Aussenden (11, 12) einer ersten (111) und einer zweiten (121) optischen Strahlung mit unterschiedlichen Wellenlängen, in Richtung der Probe, wobei eine jede derart gewählt ist, dass eine Fluoreszenzstrahlung (112, 122) der chromophoren und fluoreszierenden Verbindung (33) induziert wird, so dass eine der ersten und zweiten Strahlungen von der zweiten chromophoren Verbindung absorbiert wird und die andere kaum oder gar nicht von der zweiten chromophoren Verbindung absorbiert wird,
        - erste Messmittel zur Messung der durch die erste und die zweite Strahlung (111, 121) induzierten Fluoreszenzstrahlungen (112, 122),
        - Berechnungsmittel zum Bestimmen (25) des Gehaltes an zweiter chromophorer Verbindung (34) der Probe (30) anhand der Messung der Fluoreszenzstrahlungen (112, 122) und

    - zweite Mittel zum Bestimmen des Gehaltes an chromophorer und fluoreszierender Verbindung (33) der Probe (30) mittels optischer Messung der Absorptionsmerkmale der chromophoren und fluoreszierenden Verbindung (33), wobei die zweiten Mittel umfassen:

        - zweite Mittel zum Aussenden (13, 14) einer dritten (131) und einer vierten (141) optischen Strahlung mit unterschiedlichen Wellenlängen, in Richtung der Probe (30), so dass eine der dritten und vierten Strahlungen von der chromophoren und fluoreszierenden Verbindung absorbiert wird und die andere kaum oder gar nicht von der chromophoren und fluoreszierenden Verbindung absorbiert wird,
        - zweite Messmittel zum Messen wenigstens eines nicht absorbierten Teils der dritten und der vierten Strahlung (131, 141) und
        - Berechnungsmittel (25) zum Bestimmen des Gehaltes an chromophorer und fluoreszierender Verbindung (33) der Probe (30) anhand der Messung wenigstens eines nicht absorbierten Teils der dritten und der vierten Strahlung (131, 141),
        **dadurch gekennzeichnet, dass** die ersten Messmittel und die zweiten Messmittel gemeinsame Detektionsmittel (21) umfassen, wobei das System ferner erste Filtermittel (F2), die zwischen der Probe (30) und den gemeinsamen Detektionsmitteln angeordnet sind, umfasst, wobei die ersten Filtermittel (F2) dazu bestimmt sind:
        - den Durchgang der ersten und der zweiten Strahlung (111, 121) in Richtung der gemeinsamen Detektionsmittel (21) zu blockieren,
        - den Durchgang des nicht absorbierten Teils der dritten und der vierten Strahlung (131, 141) in Richtung der gemeinsamen Detektionsmittel (21) wenigstens teilweise zuzulassen und
        - den Durchgang der durch die erste und die zweite Strahlung (111, 121) induzierten Fluoreszenzstrahlungen (112, 122) in Richtung der gemeinsamen Detektionsmittel (21) wenigstens teilweise zuzulassen.

12. System nach Anspruch 11, **dadurch gekennzeichnet, dass**:

- die Detektionsmittel sowie die ersten und die zweiten Sendemittel auf der gleichen Seite der Gewebeprobe angeordnet sind oder
- die Detektionsmittel auf einer Seite der Gewebeprobe angeordnet sind und die ersten und die zweiten Sendemittel auf der anderen Seite der Probe angeordnet sind.

13. System nach einem der Ansprüche 11 oder 12, **dadurch gekennzeichnet, dass** es ferner zwischen den Sendemitteln (11-14) und der Probe (30) zweite Filtermittel (F1) umfasst, die vorgesehen sind, um wenigstens einen Teil der in Richtung der Probe (30) ausgesandten Strahlungen (111, 121, 131, 141) zu blockieren.

14. System nach einem der Ansprüche 11 bis 13, **dadurch gekennzeichnet, dass** es ferner Kontroll- und Steuermittel (24) umfasst, die ein Steuersignal ($S_c$) an die ersten Sendemittel (11, 12) liefern, so dass die Fluoreszenzstrahlungen (112, 122) der chromophoren und fluoreszierenden Verbindung (33), die durch die erste und die zweite Strahlung (111, 121) induziert werden, im Wesentlichen intensitätsgleich sind.

15. System nach einem der Ansprüche 11 bis 14, **dadurch gekennzeichnet, dass** es ferner Berechnungsmittel (26) umfasst, um eine Menge, die zu dem Verhältnis zwischen dem Gehalt an chromophorer und fluoreszierender Verbindung (33) und dem Gehalt an zweiter chromophorer Verbindung (34) proportional ist, zu bestimmen.

**Fig. 1**

EP 2 149 041 B1

**Fig. 2**

**Fig. 2bis**

EP 2 149 041 B1

**Fig. 3**

**Fig. 4**

**Fig. 5**

**Fig. 6**

EP 2 149 041 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2830325

- US 4986665 A

**Littérature non-brevet citée dans la description**

- **AURÉLIE CARTELAT.** Optically assessed contents of leaf polyphenolics and chlorophyll as indicators of nitrogen deficiency in wheat (Triticum aestivum L. *Field Crops Research,* 2005, vol. 91, 35-49
- **SYLVIE MEYER.** Relationships between optically assessed polyphenols and chlorophyll contents, and leaf mass per area ratio in woody plants: a signature of the carbon-nitrogen balance within leaves?. *Plant, Cell and Environment,* 2006, vol. 29, 1338-1348

- **STÉPHANE JACQUEMOUD ; FRÉDÉRIC BARET.** PROSPECT: A Model of Leaf Optical Properties Spectra. *Remote Sens. Environ.,* 1990, vol. 34, 75-91